Europäisches Patentamt

(19) European Patent Office

Office européen des brevets

(11) Publication number: **0 082 226**
**B1**

(12) **EUROPEAN PATENT SPECIFICATION**

(45) Date of publication of patent specification: **04.12.85**

(21) Application number: **81306198.3**

(22) Date of filing: **23.12.81**

(51) Int. Cl.⁴: **G 01 P 3/488**

(54) Engine with revolution counter.

(43) Date of publication of application:
**29.06.83 Bulletin 83/26**

(45) Publication of the grant of the patent:
**04.12.85 Bulletin 85/49**

(84) Designated Contracting States:
**AT DE FR GB IT SE**

(56) References cited:
**DE-A-1 943 701**
**DE-A-2 940 610**
**GB-A-2 009 939**

(73) Proprietor: **DEERE & COMPANY**
**1 John Deere Road**
**Moline Illinois 61265 (US)**

(72) Inventor: **Kryscyk, Robert**
**Hockenheimer Strasse 153**
**D-6834 Ketsch (DE)**
Inventor: **Karch, Rudi**
**Richinesstrasse 19**
**D-6700 Ludwigshafen-Ruchheim (DE)**

(74) Representative: **Pears, David Ashley et al**
**REDDIE & GROSE 16 Theobalds Road**
**London WC1X 8PL (GB)**

Courier Press, Leamington Spa, England.

## Description

The present invention relates to an internal combustion engine with an electromagnetic revolution counter, comprising a disc with ferromagnetic teeth on a shaft and an electromagnetic pick-up coil mounted closely adjacent the path of the teeth on a mounting structure including a plate which is fixed to a support part by a plurality of bolts passing through holes in the plate into the said part.

Engines with such revolution counters (or tachometers) are well known and operate on the principle that the ferromagnetic teeth moving past the pick-up coil induce voltage pulses therein. These pulses are processed in ways well known in themselves and forming no part of the present invention, in order to provide an indication of engine speed. In order to ensure reliable operation, it is necessary that the pulses shall always have sufficient amplitude and this in turn requires the pick-up coil to be mounted precisely and sufficiently close to the path of the teeth. Nevertheless adequate clearance must be maintained to avoid the coil fouling the teeth. Accordingly, in designing engines with such revolution counters, it is known to incorporate suitable mounting means which ensure that the pick-up coil is correctly positioned. Moreover an arrangement in accordance with the opening paragraph above is known from DE—A—2 940 610 in which the plate of the mounting structure is bolted flat against a flat surface of an axle part.

In contrast to this prior art, the present invention requires the mounting structure to be fitted to the engine block. Moreover a need arises to be able to fit such revolution counters to engines originally designed without them. In particular it is found desirable to be able to add electromagnetic revolution counters to the engines of tractors and other agricultural vehicles. Engine blocks typically have irregular and varied profiles. In such a situation, where the engine has not been designed to locate a pick-up coil correctly, there is the problem of conveniently, cheaply and yet accurately mounting the pick-up coil so that it is sufficiently close to the path of the teeth while preserving the necessary clearance therefrom.

This problem is solved according to the invention as defined in the characterising part of claim 1. Advantageous developments are defined in the further claims.

The invention will be described in more detail, by way of example, with reference to the accompanying drawings, in which:

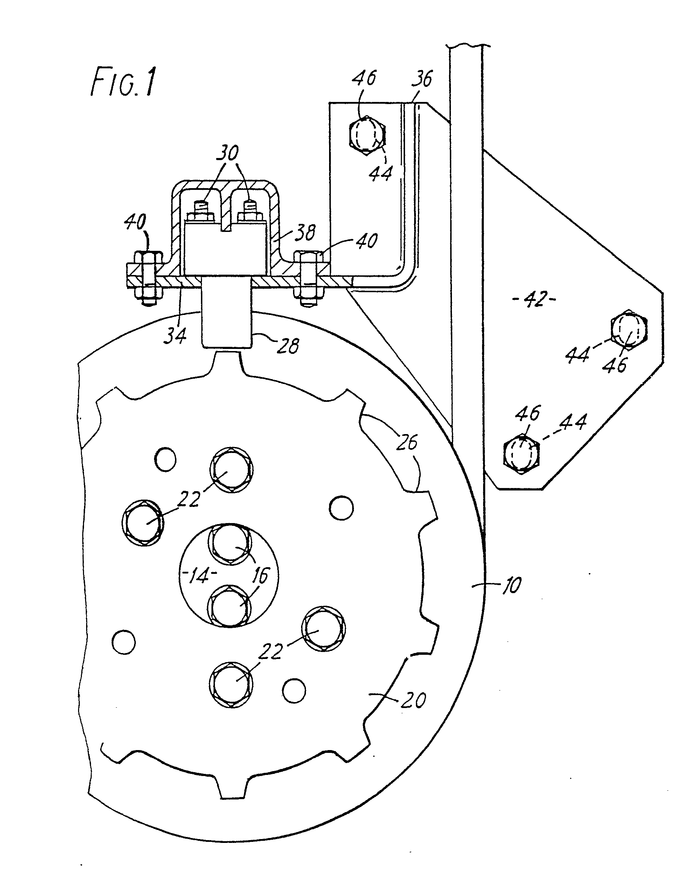

Fig. 1 is a fragmentary end elevation of a diesel engine with a revolution counter embodying the invention,

Fig. 2 is a partially sectioned side elevation taken from the right in Fig. 1, and

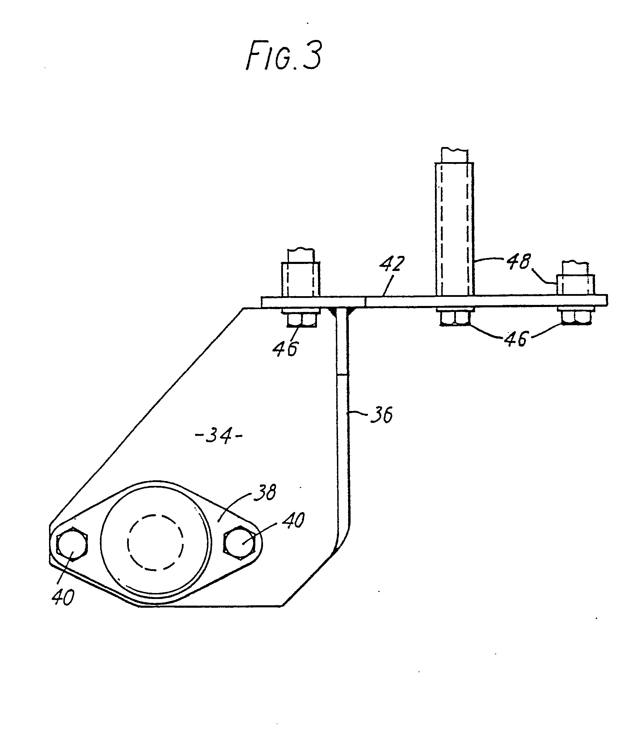

Fig. 3 is a partial plan view corresponding to Fig. 1.

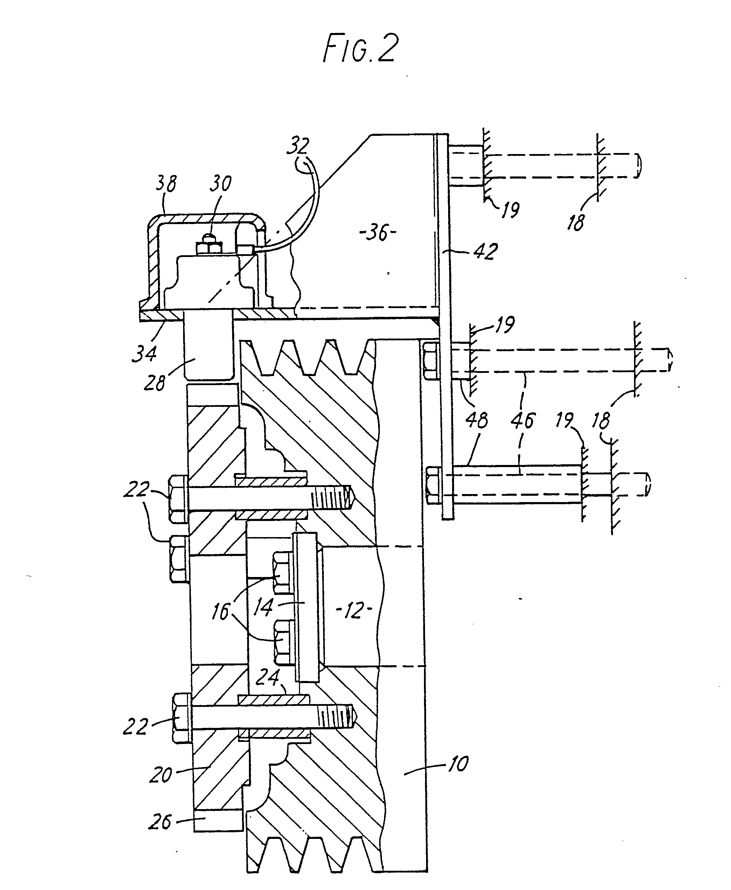

The diesel engine of a tractor is represented by a bolt drive pulley 10 which is keyed on to the main shaft 12 of the engine and held in position by a retaining plate 14 and bolts 16. The engine block is indicated in a purely schematic and fragmentary manner at 18 in Fig. 2. The pulley wheel 10 has a disc 20 bolted to it by means of bolts 22 and spacers 24. The disc 20 is made of mild steel or other magnetically soft material and is shaped so as to have a plurality of peripheral teeth 26, ten teeth in the illustrated embodiment. When the engine is running, the teeth 26 sweep closely past a pole face of an electromagnetic pick-up coil encapsulated in a coil unit 28 having terminal posts 30 connected to the two ends of the coil. Wires 32 running from the terminal posts lead to the instrumentation whereat the voltage pulses induced in the coil are processed to provide a measurement of the engine speed (RPM).

The coil unit 28 is mounted above the disc 20 through a horizontal part 34 of an L-shaped sheet metal bracket having a vertical part 36. The coil unit is held in place and protected by a cover 38 attached to the bracket part 34 by nuts and bolts 40.

The L-shaped bracket 34, 36 is welded to a flat mounting plate 42 which is perpendicular to both parts of the bracket so that the resulting structure is very rigid. The mounting plate 42 has three slots 44 through which pass bolts 46, the bolts being screwed into threaded holes in the engine block 18. Behind the mounting plate 42, spacer sleeves 48 are employed on the bolts 46 and the length of each spacer sleeve can be chosen appropriately in accordance with the existing profile of the engine block 18. In the illustrated embodiment (Fig. 2) the bolts 46 are also used to clamp a timing gear cover schematically represented at 19 on to the engine block 18. Thus the cover 19 is interposed between the engine block 18 and the spacers 48 and the profile to which the lengths of the spacers are adapted is actually the timing gear cover profile. In any event, no major changes whatsoever are required in adding the revolution counter. Apart from attaching the disc 20 in some convenient manner to the engine shaft, it is merely necessary to provide tapped holes in the engine block for the bolts 46 to fix the mounting plate 42 to the engine block. Moreover, because the bolt holes through the plate 42 are in the form of slots 44, it is possible to adjust the clearance between the coil unit 28 and the teeth 26 to the precise desired value. This attachment does not require precise location of the bolt holes in the engine block or over precise dimensioning of the mounting structure for the coil unit comprising the plate 42 and the bracket 34, 36. Although other forms of spacer structure could be employed, it is particularly advantageous to employ a flat mounting plate 42 in conjunction with spacing sleeves 48 since adaptation of the mounting to different engines merely requires selection of the appropriate bolt and spacer lengths. The coil unit 28 can be positioned accurately by slackening off the bolts 46, positioning a tooth 26 immediately beneath the coil unit and introducing a thickness gauge establishing the desired clearance between the teeth and the coil unit. The bolts 46 are then retightened.

## Claims

1. An internal combustion engine with an electromagnetic revolution counter, comprising a disc (20) with ferromagnetic teeth (26) on a shaft (12) and an electromagnetic pick-up coil (28) mounted closely adjacent the path of the teeth on a mounting structure (34, 36, 42) including a plate (42) which is fixed to a support part (18) by a plurality of bolts (46) passing through holes (44) in the plate into the said part, characterised in that the said part (18) is the engine block, and by spacing sleeves (48) on the bolts (46), between the plate (42) and the engine block (18), the lengths of the bolts and sleeves being adapted to the profile of the engine block (18).

2. An engine with a revolution counter according to claim 1, characterised in that the said holes (44) are slots permitting the clearance between the coil (28) and the teeth (26) to be adjusted.

3. An engine with a revolution counter according to claim 1 or 2, characterised in that the mounting structure comprises an L-shaped sheet metal bracket (34, 36) welded to the plate (42).

## Revendications

1. Moteur à combustion interne avec compte-tours électromagnétique comportant un disque (20) muni de dents ferromagnétiques (26), monté sur un arbre (12), et une bobine formant capteur électromagnétique (28) montée au voisinage immédiat de la trajectoire des dents sur un dispositif de montage (34, 36, 42) comprenant une plaque (42) qui est fixée sur une partie du support (18) par plusieurs vis ou boulons (46) traversant des trous (44) de la plaque et pénétrant dans cette partie, caractérisé en ce que ladite partie (18) est constituée par le bloc-moteur, et par des douilles-entretoises ou douilles d'écartement (48) engagées sur les vis ou boulons (46) entre la plaque (42) et le bloc-moteur (18), les longueurs des boulons et des douilles étant adaptées au profil du bloc-moteur (18).

2. Moteur avec compte-tours suivant la revendication 1, caractérisé en ce que ces trous (44) sont des fentes permettant de régler le jeu entre la bobine (28) et les dents (26).

3. Moteur avec compte-tours suivant la revendication 1 ou 2, caractérisé en ce que le dispositif de montage comprend une console en tôle (34, 36) en forme de L soudée sur la plaque (42).

## Patentansprüche

1. Brennkraftmaschine mit innerer Verbrennung mit einem elektromagnetischen Drehzähler, der eine Scheibe (20) mit ferromagnetischen Zähnen (26) auf einer Welle (12) und eine elektromagnetische Aufnahmewicklung (28) aufweist, die eng der Bahn der Zähne benachbart auf einer Montageanordnung (34, 36, 42) montiert ist, welche eine Platte (42) umfaßt, die auf einem Stützteil (18) durch mehrere Bolzen (46) befestigt ist, welche durch Löcher (44) in der Platte in den besagten Teil reichen, dadurch gekennzeichnet, daß der besagte Teil (18) der Maschinenblock ist, und gekennzeichnet durch Abstandshülsen (48) auf den Bolzen (46) zwischen der Platte (42) und dem Maschinenblock (18), wobei die Länge der Bolzen und Hülsen den Profil des Maschinenblockes (18) angepaßt ist.

2. Maschine mit einem Drehzähler nach Anspruch 1, dadurch gekennzeichnet, daß die besagten Löcher (44) Schlitze sind, welche eine Einstellung des Spaltes zwischen der Wicklung (28) und den Zähnen (26) ermöglichen.

3. Maschine mit Drehzähler nach Anspruch 1 oder 2, dadurch gekennzeichnet, daß die Montageanordnung einen L-förmigen Halter (34, 36) aus Blech umfaßt, der an der Platte (42) angeschweißt ist.

# 0 082 226

FIG.1

# FIG.2

# FIG.3

42

48

46

36

-34-

38

40

40

46